# EUROPÄISCHE PATENTANMELDUNG

(11) **EP 0 780 800 A2**
(43) Veröffentlichungstag der Anmeldung: **25.06.1997**
(21) Anmeldenummer: 96250277.9
(22) Anmeldetag: 04.12.1996
(51) Int. Cl.: G06T 17/50

(54) **Verfahren und Vorrichtung zur bildlichen Darstellung raumbezogener Daten**

(30) Priorität: 22.12.1995 DE 19549306
(71) Anmelder: Art + Com Medientechnologie und Gestaltung GmbH, 10787 Berlin (DE)
(72) Erfinder: Mayer, Pavel, 10823 Berlin (DE); Schmidt, Axel, 10711 Berlin (DE); Sauter, Joachim, 12101 Berlin (DE); Grüneis, Gerd, 10961 Berlin (DE)
(74) Vertreter: Pfenning, Meinig & Partner

(57) **Zusammenfassung**

Die Erfindung bezieht sich auf ein Verfahren und eine Vorrichtung zur bildlichen Darstellung raumbezogener, insbesondere geographischer Daten körperlicher Objekte, beispielsweise der Erde. Derartige Verfahren werden zur Visualisierung topographischer oder meteorologischer Daten in Form von Wetterkarten oder Wettervorhersagefilmen eingesetzt. Weitere Anwendungsbereiche ergeben sich in der Touristik, in der Verkehrslenkung, als Navigationshilfe oder auch in der Studiotechnik.

Bei dem erfindungsgemäßen Verfahren werden die raumbezogenen Daten, beipielsweise Topographie, aktuelle Wolkenverteilung, Straßen-, Fluß- und Grenzverläufe, Satellitenbilder, aktuelle Temperaturen, historische Ansichten, CAD-Modelle, aktuelle Kameraaufnahmen räumlich verteilt erhoben, gespeichert oder generiert. Für eine Bildschirmdarstellung einer Ansicht des Objektes gemäß eines Blickfeldes eines virtuellen Beobachters werden die benötigten Daten nur in der für jeden einzelnen Abschnitt des Bildes benötigten Auflösung angefordert und dargestellt. Die Unterteilung des Bildes in Abschnitte mit unterschiedlicher räumlicher Auflösung erfolgt vorzugsweise gemäß des Modells eines Binär- oder Quadrantenbaumes.

## Beschreibung

Die Erfindung bezieht sich auf ein Verfahren und eine Vorrichtung zur bildlichen Darstellung raumbezogener, insbesondere geographischer Daten flacher oder körperlicher Objekte. Derartige Verfahren werden beispielsweise zur Visualisierung topographischer oder meteorologischer Daten in Form von Wetterkarten oder Wettervorhersagefilmen eingesetzt. Weitere Anwendungsbereiche ergeben sich in der Touristik, in der Verkehrslenkung, als Navigationshilfe und in der Studiotechnik.

Die Erzeugung von Darstellungen von geographischen Informationen erfolgt nach dem Stand der Technik durch Einsatz einer sogenannten Paintbox. Diese erzeugt aus einer vorgegebenen geographischen Information Karten eines gewünschten Gebietes, die anschließend selektiv verändert, beispielsweise nach Staaten geordnet eingefärbt oder hervorgehoben oder auch in veränderter Projektion dargestellt werden können.

Ein anderes System zur Erzeugung von Ansichten einer Topographie ist in den bekannten Flugsimulatoren verwirklicht. Dabei wird ausgehend von einem fiktiven Beobachtungsort aus dem Cockpit eines Flugzeuges eine Ansicht der Umgebung generiert.

Elektronische Landkarten, wie sie heutzutage auf CD-ROM-Speichern vertreiben werden, oder auch Navigationssysteme in Landfahrzeugen erzeugen ebenfalls aus einer feststehenden Datenbasis eine schematische Ansicht der Geographie eines gewünschten Gebietes. Diese Systeme besitzen jedoch nicht die Fähigkeit, verschiedene Ansichten des Gebietes darzustellen, sondern sind auf die Kartierung topographischer Merkmale wie Straßen-, Bahnlinien- oder Flußverläufen beschränkt.

Alle erwähnten Verfahren und Vorrichtungen zur Visualisierung geographischer Daten benutzen festgelegte Datensätze, um die gewünschten Bilder zu erzeugen. Die Auflösung der Darstellung ist daher auf die Auflösung der in einer Speichereinheit abgespeicherten Datensätze begrenzt. Weiterhin können lediglich diejenigen raumbezogenen Daten betrachtet werden, die in der jeweiligen Datenbank vorgesehen sind. So ist es beispielsweise nicht möglich, Darstellungen, die aufgrund elektronisch gespeicherter Landkarten in einem Navigationssystem erzeugt wurden, mit der aktuellen Wolkenverteilung über diesem Gebiet zu versehen. Flugsimulatoren dagegen sind gewöhnlich aufgrund der begrenzten Verfügbarkeit von Speicherplatz auf die Darstellung engumgrenzter Gebiete mit vorgegebener Auflösung beschränkt.

Da die Darstellung durch die herkömmlichen Systeme auf einem festen Satz abgespeicherter Daten beruhen und daher die räumlich bezogenen Daten nicht in beliebiger Auslösung gespeichert sein können, ist keines der vorhandenen Systeme fähig, unterschiedliche räumliche Informationen nach Wahl mit einer beliebigen Auflösung darzustellen und zugleich aktuelle Informationen in die Darstellung einzubinden.

Aufgrund der in den Systemen nach dem Stand der Technik zu verarbeitenden großen Datenmengen ist die Erzeugung eines Bildes entweder sehr zeitaufwendig oder beschränkt sich auf die Darstellung eingeschränkter Informationen. Es ist folglich nicht möglich mit den herkömmlichen Systemen eine Bilderzeugungsrate zu generieren, die bei Veränderung des Standortes oder der Blickrichtung des Beobachters ausreicht, um den Eindruck einer kontinuierlichen Bewegung des Beobachters zu vermitteln.

Aufgabe der vorliegenden Erfindung ist es, ein Verfahren und eine Vorrichtung zur Darstellung raumbezogener Daten zur Verfügung zu stellen, das es ermöglicht, diese Daten in einer beliebigen vorgewählten Bildauflösung so darzustellen, wie das Objekt durch einen Beobachter mit einem wählbaren Standpunkt und einer wählbaren Blickrichtung gesehen werden würde. Eine weitere Aufgabe der Erfindung ist es, den Aufwand zur Erzeugung eines Bildes so gering zu halten, daß die Bilderzeugung so rasch stattfindet, daß bei Veränderung des Standpunktes und/oder der Blickrichtung des Beobachters der Eindruck einer kontinuierlichen Bewegung über dem Objekt entsteht.

Diese Aufgabe wird durch das erfindungsgemäße Verfahren nach dem Oberbegriff in Verbindung mit den kennzeichnenden Merkmalen von Anspruch 1 sowie durch die entsprechende Vorrichtung gelöst.

Bei dem erfindungsgemäßen Verfahren werden die raumbezogenen Daten in räumlich verteilten Datenquellen erhoben, gespeichert und/oder generiert. Diese Datenquellen umfassen beispielsweise Datenspeichern und/- oder andere Datenquellen, die raumbezogene Daten erheben und/oder generieren. Aus dem gewählten Standort und der gewählten Blickrichtung des Beobachters wird der zu beobachtende Teil des Objektes, das Blickfeld, bestimmt. Anschließend wird ein erster Datensatz, der eine grobe räumliche Auflösung aufweist, von zumindest einer der räumlich verteilten Datenquellen angefordert, übertragen und zentral gespeichert und das Blickfeld dargestellt. Liegt die Auflösung der Darstellung unterhalb der gewünschten Bildauflösung, so wird das Blickfeld in Abschnitte aufgeteilt und für jeden einzelnen Abschnitt untersucht, ob innerhalb dieses Abschnittes die Daten für eine Darstellung mit der gewünschten Bildauflösung genügen.
Wenn dies für einen der Abschnitte nicht der Fall ist werden für diesen Abschnitt weitere Daten mit einer feineren Auflösung von zumindest einer der räumlich verteilten Datenquellen angefordert, übertragen und zentral gespeichert und der Abschnitt mit den neuen Daten dargestellt. Es erfolgt wiederum eine Prüfung auf ausreichende Bildauflösung und möglicherweise eine weitere Aufteilung des geprüften Abschnitts in weitere Teilabschnitte wie oben beschrieben. Besitzt die gesamte Darstellung die gewünschte Bildauflösung oder sind in den räumlich verteilten Datenquellen keine weiteren Daten mit höherer Auflösung vorhanden, so wird das Verfahren beendet.

Die erfindungsgemäße Vorrichtung zur Durchführung dieses Verfahrens besteht demgemäß aus einer Anzeigeeinheit und einer Eingabeeinheit für den Standort und die Blickrichtung des Beobachters. Weiterhin gehört zur erfindungsgemäßen Vorrichtung eine Vielzahl räumlich verteilter Datenquellen, ein zentraler Datenspeicher, ein Datenübertragungsnetz zwischen diesen und eine Auswerteeinheit, um aus den zentral gespeicherten Daten die Darstellung der Daten auf der Anzeigeeinheit zu bestimmen.

Das erfindungsgemäße Verfahren hat gegenüber den herkömmlichen Systemen große Vorteile. Dadurch, daß die Daten räumlich verteilt erhoben, erzeugt und/oder gespeichert werden, ist die Größe der zur Verfügung stehenden Datenbasis nicht von der Größe eines zentralen Datenspeichers begrenzt. Prinzipiell ist die Menge der verfügbaren Daten in dem erfindungsgemäßen Verfahren daher nicht begrenzt und kann beliebig erweitert werden. Auch die Zugriffsgeschwindigkeit auf die räumlich verteilten Daten ist dadurch weitgehend unabhängig von der Größe der Datenbasis.

Insbesondere kann durch die räumlich verteilte Erhebung und Speicherung der Daten die Wartung und die Aktualisierung der Datenbasis verteilt und vorzugsweise in der Nähe des Raumbereiches erfolgen, der durch die räumlich verteilt erhobenen und/oder gespeicherten Daten repräsentiert wird.

Die Darstellung des Blickfeldes erfordert in den einzelnen Bereichen des Blickfeldes unterschiedliche räumliche Auflösungen der Daten, beispielsweise je nachdem, ob ein Teil des Blickfeldes sich in unmittelbarer Nähe des Beobachters oder in großer Entfernung von diesem befindet.

Das erfindungsgemäße Verfahren führt dazu, daß von den räumlich verteilten Datenquellen die Daten des darzustellenden Blickfeldes lediglich in der für die Darstellung des Blickfeldes mit der gewünschten Bildauflösung nötigen Genauigkeit angefordert werden, d.h. beispielsweise in hoher räumlicher Auflösung für nahe Bereiche des Blickfeldes oder in niedriger räumlicher Auflösung beim Blick zum Horizont eines kugelförmigen Objektes. Die Zahl der zur Darstellung des Blickfeldes nötigen und damit zentral zu speichernden Daten ist prinzipiell durch die gewählte Bildauflösung bestimmt und ist damit für jedes Bild im wesentlichen konstant. Dies gilt beispielsweise unabhängig davon, ob der Beobachter in großer Entfernung zum Objekt oder sich unmittelbar am Objekt befindet und ob der Beobachter frontal auf das Objekt oder in Richtung des Horizontes blickt. Daher ist auch der Aufwand zur Datenübertragung zur Darstellung verschiedener Blickfelder weitgehend konstant und begrenzt.

Weiterhin wird durch die aufgrund des erfindungsgemößen Verfahrens auf ein Minimum reduzierte Zahl der zentral zu speichernden Daten der Speicherbedarf und die Rechenzeit zur Erzeugung der bildlichen Darstellung stark verringert, so daß ein sehr rascher Bildaufbau möglich wird.

Vorteilhafte Weiterbildungen des erfindungsgemäßen Verfahrens und der erfindungsgemäßen Vorrichtung werden in den abhängigen Ansprüchen gegeben.

Wird eine Änderung des Standortes oder der Blickrichtung des Beobachters eingegeben, so ändert sich damit das Blickfeld. Unmittelbar nach dieser Blickfeldänderung kann das erfindungsgemäße Verfahren neu begonnen werden. Dadurch ist es möglich eine Darstellung zu erzeugen, die dem Eindruck eines sich bewegenden Beobachters entspricht. Dies kann beispielsweise zur Erstellung eines Flugsimulators verwendet werden.

Nach jedem Übertragen und zentralen Speichern von Daten erfolgt eine Bilddarstellung, auch wenn die Daten nicht ausreichend sind, um die gewünschte Bildauflösung zu ermöglichen. Dies hat zur Folge, daß selbst wenn das Verfahren wegen einer Änderung des Blickfeldes abgebrochen und für ein neues Blickfeld neu begonnen wird, ständig die Daten für ein Bild, wenn auch in geringer Auflösung zur Verfügung stehen. Bewegt sich der Beobachter also sehr schnell, so wird der Fall vermieden, daß kein Bild mehr dargestellt wird.

Der Beobachter ist also bezüglich seiner Reisegeschwindigkeit nicht eingeschränkt und es ist dennoch sichergestellt, daß ständig ein Bild dargestellt wird.

Besonders vorteilhaft ist es, wenn grundsätzlich für einen Abschnitt immer dieselbe Zahl Daten, d.h. Daten mit derselben, einheitlichen Auflösung angefordert werden. Durch die Teilung und damit Verkleinerung der Abschnitte während des erfindungsgemäßen Verfahrens wird so eine ständige Verfeinerung der Daten im Verlaufe des erfindungsgemäßen Verfahrens erreicht.

Nach der Veränderung des Blickfeldes können zur Verringerung des zentralen Speicherbedarfs die nicht länger benötigten Daten mit hoher Auflösung aus dem zentralen Speicher entfernt werden. Wird allerdings ein Datensatz mit grober Auflösung, der das gesamte Objekt repräsentiert, ständig im zentralen Speicher gehalten, so kann die Darstellung bei raschen Blickfeldänderungen verbessert werden.

Als Aufteilungsverfahren für das Blickfeld und die Abschnitte eignet sich für in der Ebene darstellbare Objekte der Binär- oder der Quadrantenbaum, während für Objekte, deren dreidimensionale Ausdehnung berücksichtigt werden muß, ein Oktantenbaum besonders geeignet ist.

Durch diese Aufteilung nach einem festen Schema kann jedem Abschnitt des Objektes eine feste Adresse gegeben werden, wobei die Adresse eines Abschnitts sich beispielsweise aus der Adresse des Mutterabschnittes ergibt, der für die Unterabschnitte eine weitere Zahl, beispielsweise 0, 1, 2 und 3 für jeden der vier Unterabschnitte des Quadrantenbaums oder die Zahlen 0 bis 7 für jeden der Unterabschnitte eines Oktantenbaumes, angefügt wird. Bei immer konstanter Datenzahl pro Abschnitt ist durch die Stellenzahl einer Abschnittsadresse zugleich das räumliche Auflösungsniveau der Daten bestimmt.

Diese Unterteilungsverfahren können auch nebeneinander angewendet werden, wobei sich ein derartigen adaptives Unterteilungsverfahren insbesondere für kugelförmige Objekte, deren Oberfläche zweidimensional abgebildet wird, eignet. Bei der planaren Darstellung einer Kugeloberfläche kann dabei beispielsweise an den Polen der Kugel vom Quadrantenbaum zum Binärbaum übergegangen werden.

Als Objekte eignen sich insbesondere Himmelskörper wie die Planeten des Sonnensystems, deren Topographie dargestellt werden kann. Weitere raumbezogene Daten solcher Objekte schließen unter anderem meteorologische oder geologische Informationen, beispielsweise Wolkenverteilungen, politische, wirtschaftliche und soziale Daten und insbesondere Farbinformationen über das Aussehen der Himmelskörper, wie sie beispielsweise für die Erde aus Satellitenbildern und für andere Planeten aus Aufnahmen von Raumsonden erhalten werden, mit ein.

Es können folglich beliebige weitere geographisch bezogene Daten dargestellt werden. Die Darstellung kann dabei sowohl nach kartographischen Gesichtspunkten oder auch als Globus erfolgen.

Zur bildlichen Darstellung der Oberfläche räumlicher Objekte eignen sich besonders zweidimensionale Darstellungen, da durch die Reduktion der Zahl der Dimensionen von drei auf zwei die Zahl der zur verarbeitenden Koordinaten und der zu ladenden Daten stark verringert und damit die Leistung des erfindungsgemäßen Verfahrens und der erfindungsgemäßen Vorrichtung, beispielsweise die Bildwiederholrate bei raschen Bewegungen des Beobachters, verbessert wird. Eine solche Darstellung ist insbesondere dann ausreichend, wenn die Darstellung auf einem zweidimensionalen Bildschirm oder einem anderen zweidimensionalen Medium erfolgt.

Um auch in zweidimensionalen Abbildungen dreidimensionale Informationen darzustellen, kann die zweidimensionale Grundschicht mit weiteren zweidimensionalen Schichten ergänzt werden, auf denen die weiteren Informationen dargestellt werden.

Als Modell zur zweidimensionalen Darstellung der Oberfläche räumlicher Körper eignet sich insbesondere ein geometrisches Modell, bei dem die Oberfläche in Polygone eingeteilt wird. Bei dem topographischen Gittermodell zeichnet dabei das Polygongitter die Topographie der Oberfläche nach. Durch diese Darstellung genügt die Angabe der zwei Koordinaten eines Gitterpunktes, um einen räumlichen Bezug zwischen verschiedenen Daten und der Oberfläche des dargestellten Objektes herzustellen.

Auf dem Hintergrund dieses Gitters werden nun die Daten dargestellt. Besonders einfach ist die Darstellung von Höheninformationen durch Auftrag unterschiedlicher Farben (Farbvertices). Auch Satellitenbilder oder Informationen über Wolkenformationen können über dieses Gitter gelegt werden (Texturierung). Wird das Gitter nicht äquidistant sondern mit unterschiedlich großen Gittermaschen (adaptives Gitter) angelegt, so ist es möglich, bestimmte Bereiche, wie z.B. Gebiete starker Höhenänderungen, durch ein dort engeres Gitternetz besser aufzulösen und darzustellen.

Die räumlich verteilt erhobenen und/oder gespeicherten Daten der räumlich verteilten Datenquellen können am Ort Ihrer Erhebung und/oder Speicherung mit Verweisen versehen werden, die auf die Speicherorte für Daten benachbarter Bereiche oder weiterer Daten über den eigenen Bereich zeigen. Wenn derartige Verknüpfungen (Hyperlinks) der räumlich verteilten Daten untereinander existieren, benötigt das zentrale System keine Kenntnis der exakten räumlichen Speicherstellen für alle Daten des Objektes, da es ausgehend von einem der räumlich verteilten Speicher zu den weiteren Daten verwiesen wird.

Der Standort und die Blickrichtung des Beobachters ist prinzipiell nicht eingeschränkt. Folglich kann der Beobachter von einer sehr gering aufgelösten Ansicht, beispielsweise der Erde aus dem Weltraum zu einer Ansicht einzelner Atome übergehen. Der Bereich der räumlichen Auflösungen überstreicht viele Größenordnungen. Um auch mit Auswerteeinrichtungen, die intern mit einer begrenzten numerischen Genauigkeit arbeiten, beispielsweise mit Computern mit einem auf 32 bit begrenzten Adressraum und/oder einer auf 32 bit begrenzten Fließkommadarstellung für Zahlen, beliebige Auflösungen zu ermöglichen, werden nach einer Änderung des Standortes und des Blickwinkels des Beobachters die Daten auf ein neues Koordinatensystem mit einem neuen Koordinatenursprung umgerechnet. Während einer kontinuierlichen Bewegung des Beobachters werden folglich die Koordinaten der Daten ständig einer Koordinatentransformation unterzogen.

Werden die Daten der an das Blickfeld angrenzenden Bereiche ständig in einer höheren Auflösung zentral gespeichert oder wird eine Wahrscheinlichkeitsabschätzung für eine zukünftige Änderung des Blickfeldes durchgeführt und die Daten der Bereiche mit der höchsten Wahrscheinlichkeit vorweg angefordert, übertragen und zentral gespeichert, so läßt sich die Darstellung mit der gewünschten Bildauflösung bei einer plötzlichen Änderung des Blickfeldes beschleunigen.

Die durch das erfindungsgemäße Verfahren dargestellten Daten können neben Daten realer Eigenschaften des beobachteten Systems auch Modelle, beispielsweise CAD-Modelle von Gebäuden, oder animierte Objekte beinhalten. Die Darstellung räumlich bezogener Daten, beispielsweise Temperaturmeßwerte, kann außerdem durch in die Darstellung eingefügte Anzeigetafeln erfolgen. Weiterhin kann auch von dargestellten, raumbezogenen, räumlich verteilt gespeicherten Daten zur Darstellung unmittelbar erzeugten Materials übergegangen werden. So können beispielsweise statt räumlich verteilt gespeicherter Satellitenaufnahmen der Erde auch unmittelbar Kameraaufnahmen eines Satelliten oder statt der Darstellung eines öffentlichen Platzes direkt mit einer laufenden Kamera erzeugte Bilder des Platzes dargestellt werden. Der Satellit stellt in diesem Falle eine der räumlich verteilten Datenquellen dar.

Zur Datenübertragung von den räumlich verteilten Datenquellen zu dem zentralen Speicher eigenen sich aufgrund ihrer hohen Datenübertragungsrate insbesondere asynchrone Übertragungsverfahren.

Im Folgenden werden beispielhafte Ausführungsformen des erfindungsgemäßen Verfahrens und der erfindungsgemäßen Vorrichtung gegeben.

Es zeigt
- Fig. 1: den Aufbau einer erfindungsgemäße Vorrichtung;
- Fig. 2: eine erfindungsgemäße Vorrichtung;
- Fig. 3: ein Schema der Unterteilung des Blickfeldes in Abschnitte nach dem Modell eines Quadrantenbaumes;
- Fig. 4: ein Schema einer adaptiven Unterteilung des Blickfeldes in eine Binär- oder Quadrantenstruktur;
- Fig. 5: ein Schema der Unterteilung des Blickfeldes in Abschnitte nach dem Modell eines Oktantenbaumes;
- Fig. 6: die Verbindung einzelner Datenabschnitte durch Querverweise;
- Fig. 7: die Einteilung des Blickfeldes in unterschiedliche Detailniveaus;
- Fig. 8: eine kartographische Darstellung einer Wolkenverteilung der Erde;
- Fig. 9: eine Darstellung einer Wolkenverteilung der Erde als Globus;
- Fig. 10: eine Darstellung der Erde als Globus mit Wolkenverteilung;
- Fig. 11: Eine Darstellung eines Teils der Erde mit Temperaturanzeigetafeln.

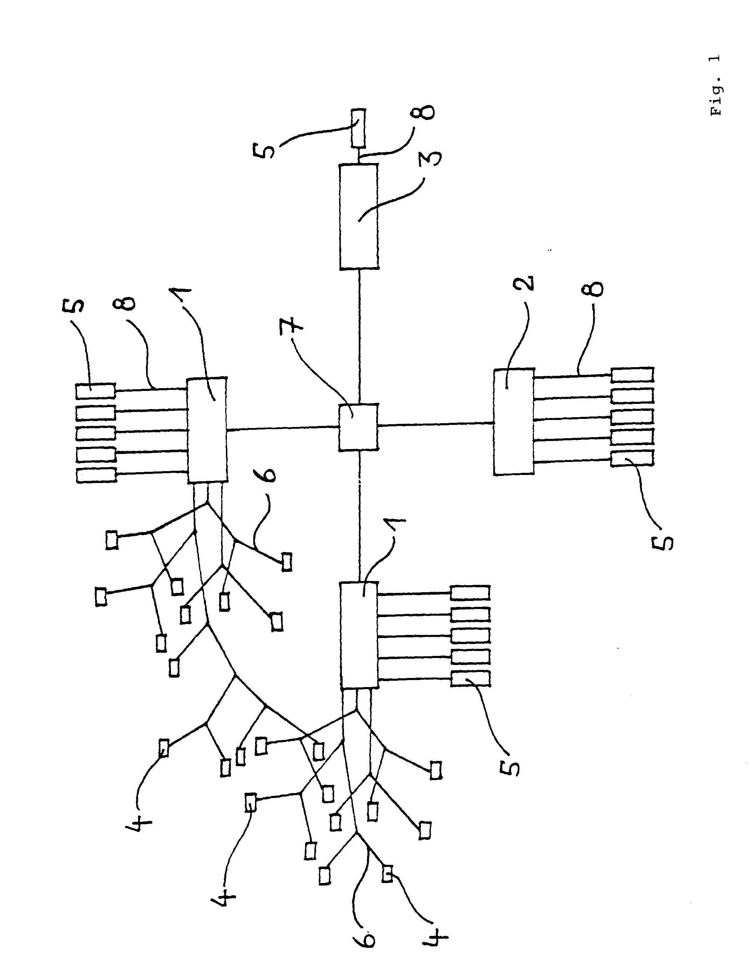

Fig. 1 zeigt den Aufbau einer erfindungsgemäßen Vorrichtung zur Darstellung geographisch bezogener Daten der Erde. Die Vorrichtung besteht aus einer Vielzahl räumlich verteilter Datenquellen 4, einem Datenübertragungsnetz, mehreren Geräten 1, 2 und 3 als zentrale Speicher und Vorrichtungen zur Bestimmung der Darstellung der zentral gespeicherten raumbezogenen Daten (Auswerteeinheiten) und mehreren Anzeigeeinheiten 5. Diese erfindungsgemäße Vorrichtung ermöglicht es, daß mehrere Auswerteeinheiten 1, 2 und 3 zugleich auf die gemeinsamen räumlich verteilten Datenquellen 4 zugreifen.

Die Datenübertragungseinrichtung besteht aus einem Übertragungsnetz mit Leitungen 6, 7 und 8. Das Netz besitzt unterschiedliche Leitungstypen. Die Leitungen 6 dienen als Sammelnetz der Übertragung von Daten von den räumlich verteilten Datenquellen 4. Die Leitungen 7 dienen als Austauschnetz dem raschen Austausch von Informationen zwischen einzelnen Knoten und die Leitungen 8 dienen als Liefernetz der Lieferung der Bildschirmdarstellung von den Auswertevorrichtungen 1, 2 und 3 an die Anzeigeeinheiten 5.

Die Knoten unterteilen sich wiederum in Primärknoten 1, Sekundärknoten 2 und Tertiärknoten 3. Dabei ist ein Primärknoten sowohl an das Austauschnetz 7 als auch über die Leitungen 6 direkt mit den räumlich verteilten Datenquellen und mit den Leitungen 8 direkt mit den Anzeigeeinheiten 5 verbunden. Der Sekundärknoten 8 ist lediglich mit dem Austauschnetz 7 und direkt über die Leitungen 8 mit den Anzeigeeinheiten 5 verbunden. Der Tertiärknoten 3 besitzt lediglich eine Verbindung zu der Anzeigeeinheit 5 und zu dem Austauschnetz 7.

Als Knotenrechner wurden Systeme der Firma Silicon Graphics verwendet (SGI Onyx). Dieser Rechner ist in der Lage über 500000 texturierte Dreiecke pro Sekunde darzustellen und ist folglich für einen raschen Bildaufbau geeignet. Er arbeitet mit Fließkommazahlen mit einer 32-bit-Darstellung. Da diese Genauigkeit schon in dem vorliegenden Beispiel nicht genügt, um beispielsweise eine Bewegung eines Beobachters aus dem Weltall kontinuierlich bis zu einer cm-Auflösung auf der Erde zu verfolgen, wurden die Koordinaten der Daten während einer solchen Bewegung ständig auf ein neues Koordinatensystem mit einem in der Nähe des Beobachters befindlichen Koordinatenursprung umgerechnet.

Die für die Bilddarstellung benötigten geographischen Daten werden über das Sammelnetz 6 aus den verteilten räumlich verteilten Speichern 4 angefordert und übertragen. Die räumlich verteilten Speicher befinden sich vorzugsweise in der Nähe der Gebiete auf der Erde, deren Daten sie enthalten. Dadurch werden die Daten dort an Ort und Stelle erfaßt, gespeichert und gewartet, wo die Kenntnis der durch die Daten zu repräsentierenden räumlich bezogenen Eigenschaften, wie beispielsweise Topographie, politische oder soziale Informationen etc. am genauesten ist. Weitere Datenquellen befinden sich an den Orten, wo weitere Daten erfaßt bzw. zusammengefaßt werden, wie beispielsweise meteorologische For-schungsstationen, die die von Satelliten aufgenommenen Informationen sammeln und aufbereiten.

Charakteristisch am Datenfluß im Sammelnetz 6 ist, daß der Datenfluß in einer Richtung erfolgt. Für dieses Netz wurde das Internet oder ISDN-Leitungen verwendet.

Das Austauschnetz 7 dient dem Austausch von Daten zwischen einzelnen Knoten. Durch engmaschige Verknüpfung der einzelnen Knoten kann das Netz gegen den Ausfall einzelner Leitungen oder gegen Lastspitzen abgesichert werden. Da das Austauschnetz 7 eine hohe Übertragungsrate in beide Richtungen gewährleisten muß, wurde hier eine Standverbindung mit asynchronem Übertragungsprotokoll mit einer Übertragungsrate, die größer als 35 MBit/s ist, verwendet. Auch Satellitenverbindungen eignen sich für das Austauschnetz 7.

Im Liefernetz 8 werden im wesentlichen die für die Darstellung benötigten Bilddaten zu der Anzeigeeinrichtung 5 übersandt. Folglich wird eine hohe Datenübertragungsrate von bis zu 2 MBit/s in Richtung der Anzeigeeinheit benötigt, die durch eigene asynchrone Verbindungen oder auch über eine Bündelung von ISDN-Verbindungen ermöglicht wird.

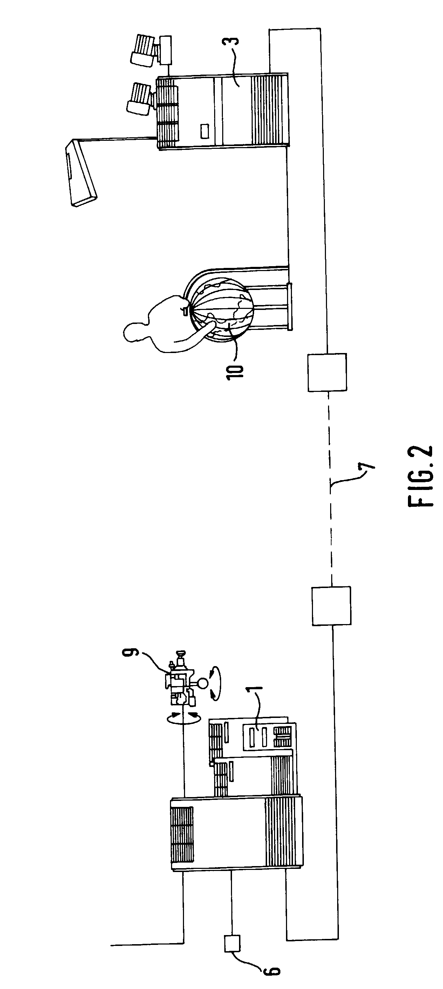

Fig. 2 zeigt zwei über ein Austauschnetz 7 verbundene Knoten, einen Primärknoten 1 und einen Tertiärknoten 3. Über das Liefernetz 8 ist ein Eingabemedium 10 zur Eingabe des Standortes und der Blickrichtung des Beobachters mit dem Tertiärknoten 3 verbunden. Mit dem Knotenrechner 1 ist ein Sammelnetz 6 und eine Kamera 9, die durch das Eingabemedium 10 gesteuert werden kann, verbunden. Das Eingabemedium 10 bestand aus einem dreidimensionalen Trackball in Verbindung mit einer Space-Mouse mit sechs Freiheitsgraden, um sowohl den Standort als auch die Blickrichtung des Beobachters verändern zu können. Als weitere Eingabemedien kommen automatische Positionsbestimmungssysteme in Frage, wie sie in Navigationshilfen für Kraftfahrzeuge oder Flugzeuge verwendet werden.

Bei dieser beispielhaften Ausführungsform wird zur Darstellung der Daten ein zweidimensionales Polygongittermodell verwendet, das als zweidimensionales Koordinatensystem für die Positionierung der Daten dient. Als darzustellende Daten wurden beispielsweise Satellitenbilder, d.h. Informationen über die Färbung der Erdoberfläche oder geopolitische Daten oder aktuelle oder gespeicherte meteorologische Daten verwendet. Es wurden auch Bilder desselben Ortes auf der Erdoberfläche zu unterschiedlichen Zeitpunkten dargestellt, wodurch sich eine Art "Zeitreise" realisieren ließ.

Tabellarische Daten, wie beispielsweise Temperaturinformationen wurden als Anzeigetafeln in die Darstellung eingeblendet. Für bestimmt Gebiete waren CAD-Modelle von Gebäuden vorhanden, die in die Darstellung eingefügt wurden. Der Standpunkt des Beobachters konnte anschließend beliebig in diese CAD-modellierten Gebäude verlegt werden.

Über Ortungssysteme können in diesem System auch Symbole, beispielsweise für Schiffe, Flugzeuge oder Kraftfahrzeuge, an ihrer augenblicklichen geographischen Position eingefügt und/oder animiert werden.

Als Modell zur Unterteilung des Blickfeldes in Abschnitte und dieser Abschnitte in weitere Abschnitte wurde ein Quadrantenbaum verwendet, bei dem eine fortschreitende Unterteilung eines Bereiches in jeweils vier Abschnitte durchgeführt wird.

Nach der Auswahl der Erde als Objekt und der Eingabe eines Standortes und einer Blickrichtung in dem Endgerät 5 bestimmt der Knoten 3 das Blickfeld des Beobachters und fordert die Daten über das Austauschnetz 7 und die Knoten 1 und 2 an. Diese Knoten wiederum fordern über das Sammelnetz 6 von den räumlich verteilten Datenquellen 4 oder beispielsweise von der Kamera 9 die benötigten Daten an und senden sie über das Austauschnetz 7 an den Knoten 3 zur zentralen Speicherung. Der Knoten 3 bestimmt die Darstellung der in ihm zentral gespeicherten Daten und sendet diese Information zur Darstellung über das Liefernetz 8 an die Anzeigeeinrichtung 5.

Stellt der Knoten 3 anschließend fest, daß mit den zentral gespeicherten Daten die gewünschte Bildschirmauflösung nicht erreicht wurde, so teilt er das Blickfeld gemäß des Modelles des Quadrantenbaumes in vier Abschnitte und überprüft jeden Abschnitt, ob durch die Darstellung der in diesem Abschnitt enthaltenen Daten die gewünschte Bildauflösung erreicht wurde. Ist die gewünschte Bildauflösung nicht erreicht, so fordert der Knoten 3 weitere Daten für diesen Abschnitt an. Dieses Verfahren wird für jeden Abschnitt solange wiederholt, bis in der gesamten Darstellung die gewünschte Bildauflösung erreicht ist. Die Anforderung der Daten erfolgt in diesem Beispiel immer mit derselben Auflösung von 128 x 128 Punkte. Aufgrund der Aufteilung eines Abschnittes in jeweils vier Unterabschnitte werden daher bei jeder Datenübertragung Daten geladen, die eine vierfach höhere räumliche Genauigkeit besitzen.

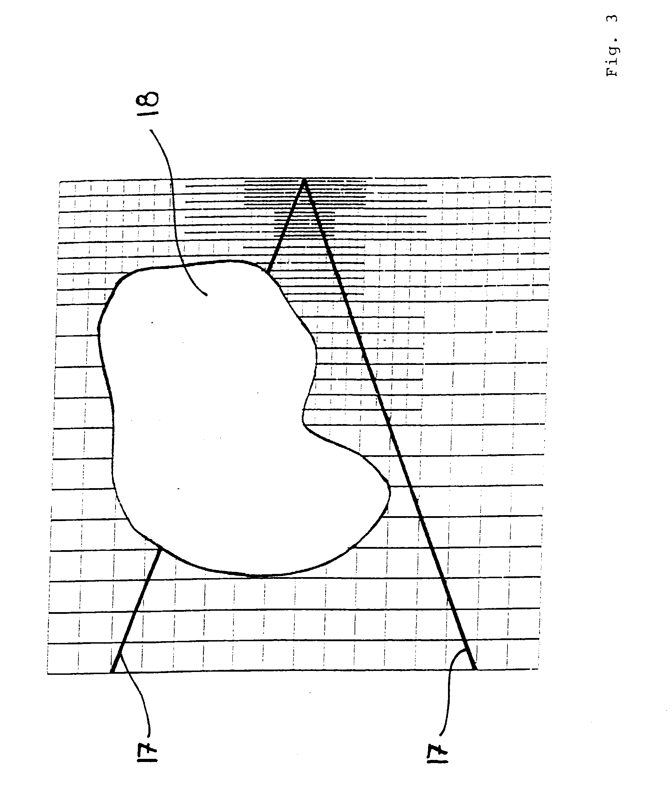

Fig. 3 zeigt schematisch die Ansicht eines Objektes 18 durch einen Beobachter, dessen Blickfeld durch die beiden Linien 17 begrenzt wird. Bei gleichbleibender bildlicher Darstellung, hängt die benötigte räumliche Auflösung der Daten von ihrer Entfernung vom Beobachter ab. Für unmittelbar vor dem Beobachter befindliche Objekte müssen Daten mit einer größeren räumlichen Auflösung als für weiter entfernte Objekte vorliegen, um dieselbe Bildauflösung zu erreichen.

In Fig. 3 sind insgesamt vier verschiedene Unterteilungsstufen nach dem Modell des Quadrantenbaumes dargestellt. Das eingezeichnete Objekt erstreckt sich innerhalb des Blickfeldes über insgesamt drei Auf lösungsstufen. Die Daten für den zum Blickfeld gehörende Bereich des Objektes müssen daher in Richtung auf den Beobachter mit größerer räumlicher Auflösung geladen werden.

Dadurch, daß die Daten abschnitsweise lediglich in der für die Bildauflösung benötigten Genauigkeit zentral gespeichert werden, hängt die Zahl der zentral gespeicherten Daten im wesentlichen lediglich von der gewünschten Bildauflösung ab.

Befindet man sich beispielsweise ca. 1000 m über der Erdoberfläche, so hat das Blickfeld eine Ausdehnung von ca. 50 km x 50 km. Die Bildauflösung soll dabei größer als ca. 3000 x 3000 Bildpunkte sein. Zur Darstellung des Blickfeldes mit dieser Bildauflösung werden alle 150 m ein Höhenwert und alle 15 m ein Bildwert der Oberfläche benötigt. Daraus ergibt sich ein zentraler Speicherbedarf von ca. 35,6 MByte, um sämtliche zur Bilddarstellung nötigen Informationen zu speichern.

Befindet man sich jedoch im Weltraum und hat die Nordhalbkugel voll im Blickfeld, so benötigt man für eine Darstellung mit derselben Bildauflösung alle 50 km einen Höhenwert und alle 5 km einen Bildwert der Oberfläche. Insgesamt ergibt sich ein zentraler Speicherbedarf von 39,2 MByte, der in der gleichen Größenordnung wie der Speicherbedarf für die Darstellung der Ansicht des 50 km x 50 km Ausschnittes der Erdoberfläche aus 1000 m Höhe liegt.

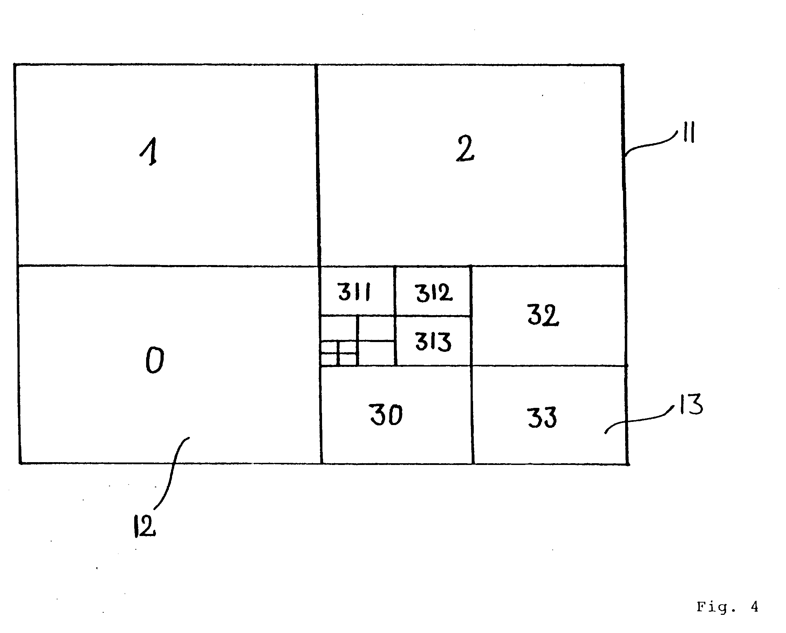

Fig. 4 zeigt die Bildung einer Adresse eines Abschnittes bei Verwendung des Modelles eines Quadrantenbaumes zur Unterteilung des Blickfeldes 11. Bei der ersten Unterteilung des Blickfeldes 11 in vier Abschnitte 12 werden diese im Uhrzeigersinn mit den Zahlen 0 bis 3 bezeichnet. Wird ein Abschnitt weiter unterteilt, so werden die einzelnen Unterabschnitte 13 in derselben Weise nummeriert und der so erhaltenen Nummer die Nummer des Mutterabschnittes vorangestellt. Bei immer gleicher Auflösung von beispielsweise 128 x 128 Punkten pro Abschnitt, ist die Stellenzahl der Abschnittsnummer zugleich eine Angabe über das Niveau der räumlichen Genauigkeit der Daten.

Vorteilhaft an dieser Art der Adressbildung ist weiterhin, daß jeder Abschnitt des darzustellenden Objektes eine feste Adresse besitzt, die die Suche nach den zugehörigen Daten stark vereinfacht.

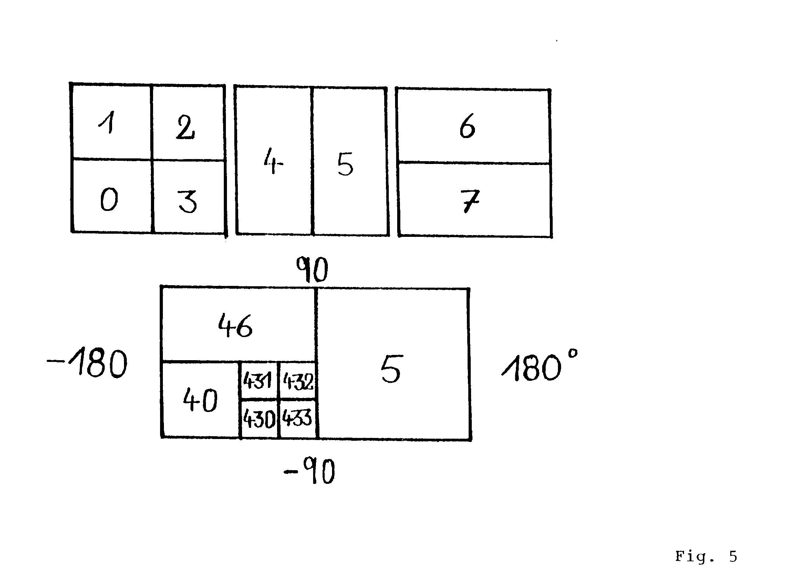

In Fig. 5 ist gezeigt, wie ein Binärbaum mit einem Quadrantenbaum zur Erzeugung eines adaptiven Unterteilungsmodelles gemischt werden kann. In der oberen Reihe der Vierecke ist die Unterteilung in zwei Tochterabschnitte 4 und 5 (senkrecht) oder 6 und 7 (waagrecht) dargestellt. Im unteren Teil der Zeichnung ist eine weitere Unterteilung des Abschnittes 4 in einen länglichen oberen Teil 46 und zwei untere Teile 40 und 43 dargestellt. Der Abschnitt 43 ist anschließend wieder gemäß des Modelles eines Quadrantenbaumes in vier Tochterabschnitte unterteilt. Ein derartiges adaptives Unterteilungsmodell kann beispielsweise bei der Darstellung der Erde in einem zweidimensionalen Modell im Bereich der Pole verwendet werden.

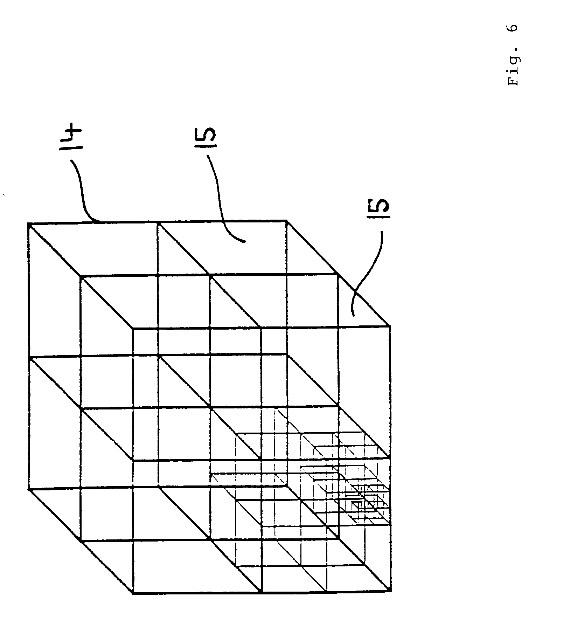

Fig. 6 zeigt die Unterteilung gemäß eines Oktantenbaumes für eine Darstellung, die auf einem dreidimensionalen geometrischen Modell beruht. Hier wird ein Abschnitt 14 eines Raumes in acht räumliche Unterabschnitte 15 unterteilt. Durch das erfindungsgemäße Verfahren werden folglich auch hier die Daten gerade derjenigen Raumbereiche in höherer Genauigkeit angefordert, bei denen dies zur Erreichung der gewünschten Bildauflösung nötig ist. Auch hier kann für jeden Abschnitt immer dieselbe Zahl Punkte, beispielsweise 128 x 128 x 128 Punkte, angefordert, übertragen und zentral gespeichert werden, wodurch sich bei der Unterteilung eines Mutterabschnittes 14 in acht Tochterabschnitte 15 eine verbesserte räumliche Genauigkeit der Daten im Bereich der einzelnen Tochterabschnitte 15 ergibt.

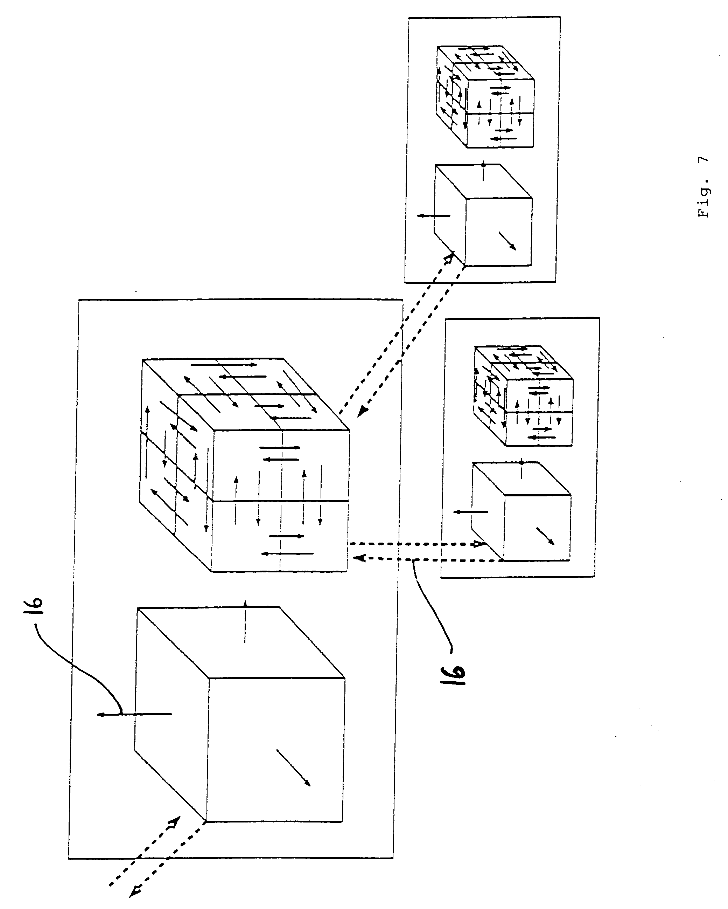

Fig. 7 zeigt ein Modell für die Verwendung von Verweisen (sogenannten 'Hyperlinks') auf verschiedenen Abschnittsebenen. Die einzelnen Abschnitte besitzen Verweise 16 auf den Speicherort sowohl der Daten nebenliegender Abschnitte als auch von Daten anderer Thematik, jedoch mit derselben räumlichen Zuordnung. Hierdurch können, ausgehend von den Daten eines Abschnittes, die Daten der nebenliegenden Abschnitt oder weitere Daten über denselben Abschnitt ermittelt werden. Insbesondere kann der Knoten 3 die Daten eines Abschnittes neben einem ihm bekannten Abschnitt anfordern, ohne eigene Kenntnis über den Speicherort der nebenliegenden Abschnittsdaten zu besitzen. Dadurch lassen sich die räumlich verteilten Datenerhebungs- und Speichersysteme beliebig erweitern bzw. warten, ohne daß bei jeder Änderung die zentralen Speicher und Auswerteeinheiten in Kenntnis der Änderung gesetzt werden müßten.

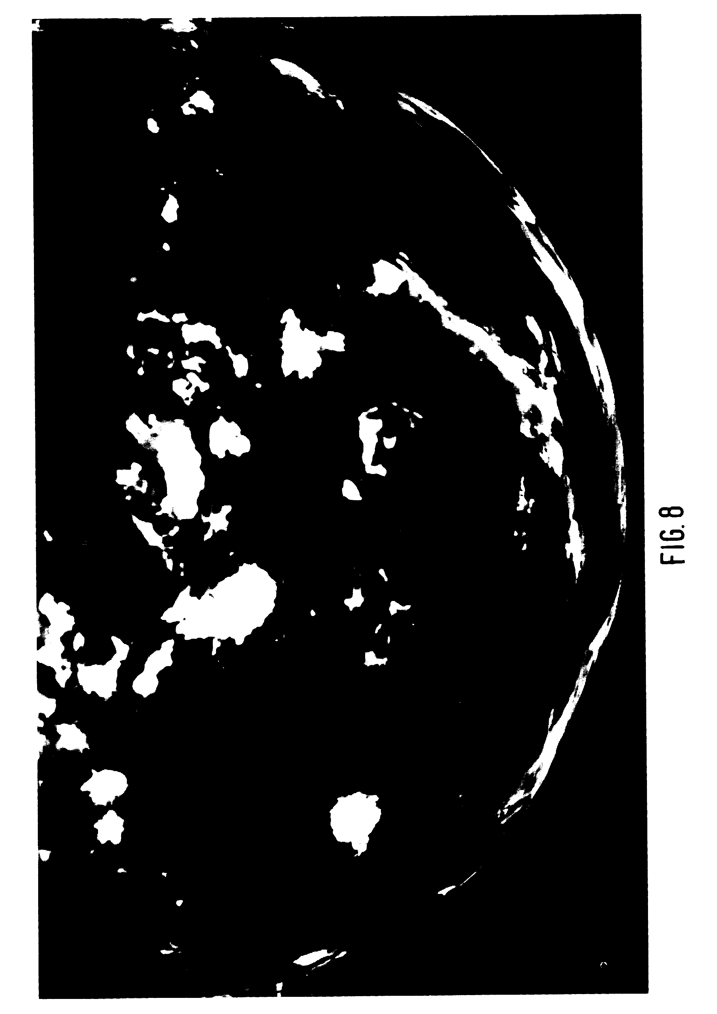

Figuren 8 bis 11 zeigen Darstellungen der Erde, die durch ein Verfahren unter Verwendung eines Quadrantenbaumes erzeugt wurden. Die benötigten Daten wurden aus räumlich verteilten Datenbanken von Forschungsinstituten angefordert.

Fig. 8 zeigt eine Darstellung der Wolkenverteilung auf der Erdoberfläche, wie sie von einem Wettersateliten bestimmt wurde. Als Darstellungsform wurde eine Zylinderprojektion verwendet. Der obere Rand stellt den Nordpol und der untere Rand den Südpol dar. Als Darstellungsmodell wurde ein zweidimensionales topographisches Gitternetz der Erdoberfläche gewählt. Da die Wolkenschicht gewöhnlich einen Abstand von der Erdoberfläche besitzt, wurde die Wolkenverteilung auf einer zweiten, außerhalb der Darstellung der Erdoberfläche befindlichen Schicht dargestellt. Dadurch ergibt sich trotz der lediglich zweidimensionalen Darstellung für einen Beobachter die realitätsnahe Möglichkeit, sich der Erdoberfläche "durch" die Wolkenschicht hindurch zu nähern. Als Datenquellen für die zum Zeitpunkt der Bilddarstellung aktuelle Wolkenverteilung wurden die durch Satellitenüberwachungssysteme erzeugten Daten meteorologischer Forschungsinstitutionen verwendet.

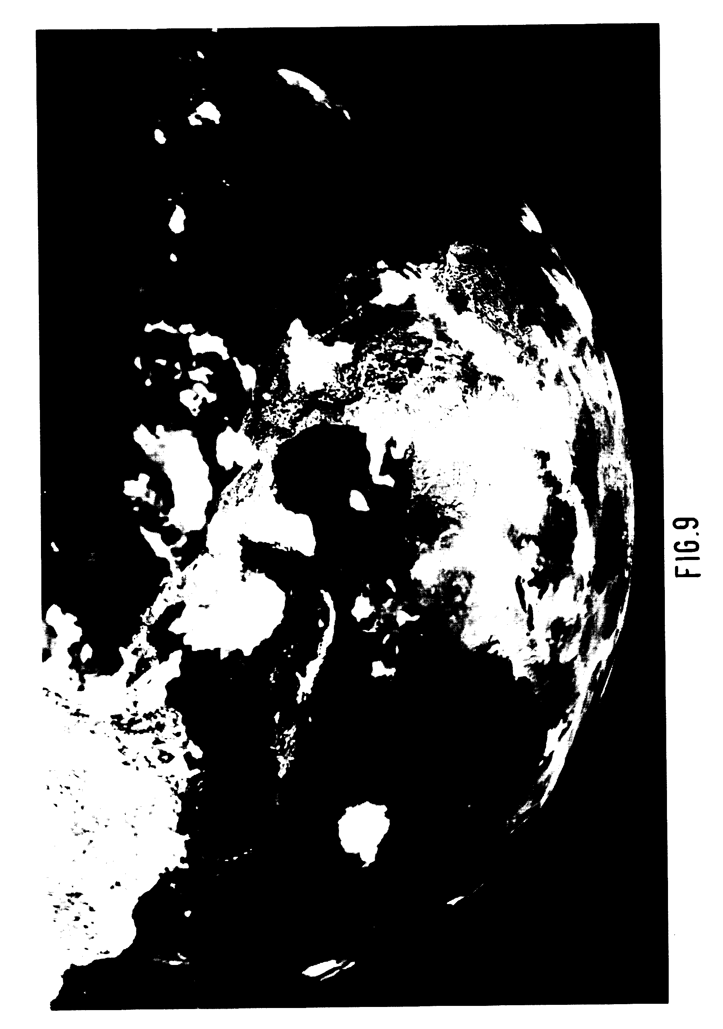

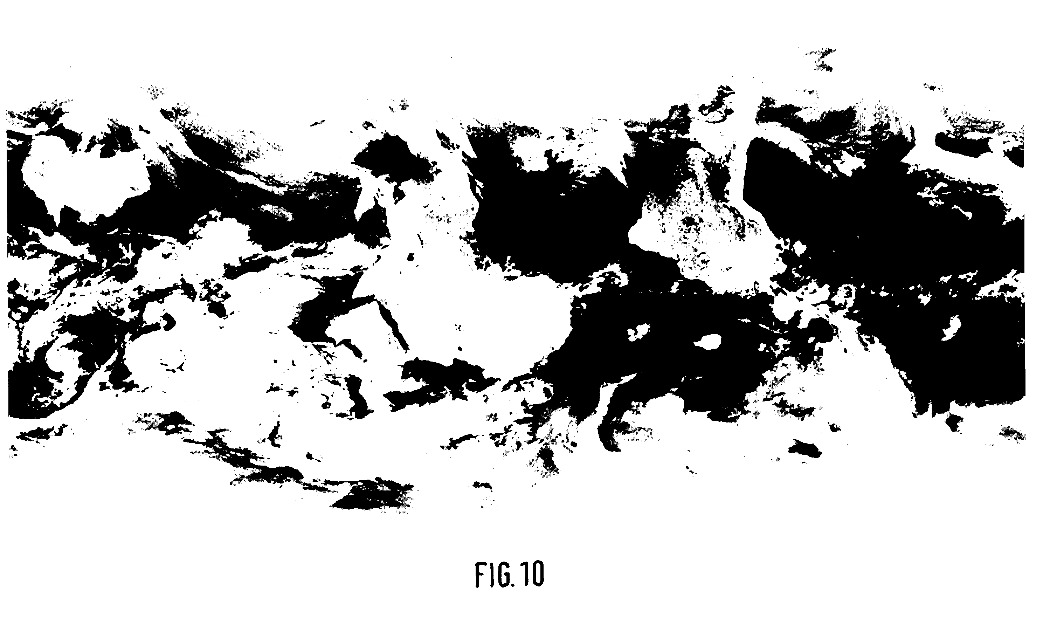

Fig. 9 zeigt dieselbe Wolkenverteilung. Nunmehr wurde die Erde als Globus dargestellt, wie sie sich einem Beobachter im Weltraum darstellen würde. Fig. 10 zeigt die Darstellung derselben Wolkenverteilung in Verbindung mit der Darstellung der Landmassen der Erde, wie sie sich einem Beobachter im Weltraum darstellen würde. Zur Darstellung der Ansicht der Erdoberfläche wurde das topographische Gitternetz mit Farbinformationen aus den Pixelgrafiken von Satellitenbildern der Erdoberfläche versehen. Da zum Zeitpunkt der Bilderzeugung aktuelle Wolkeninformationen zur Bilderzeugung verwendet wurden, ergab sich eine realitätsnahe Darstellung der Ansicht der Erde aus dem Weltraum zum Zeitpunkt der Bilderzeugung.

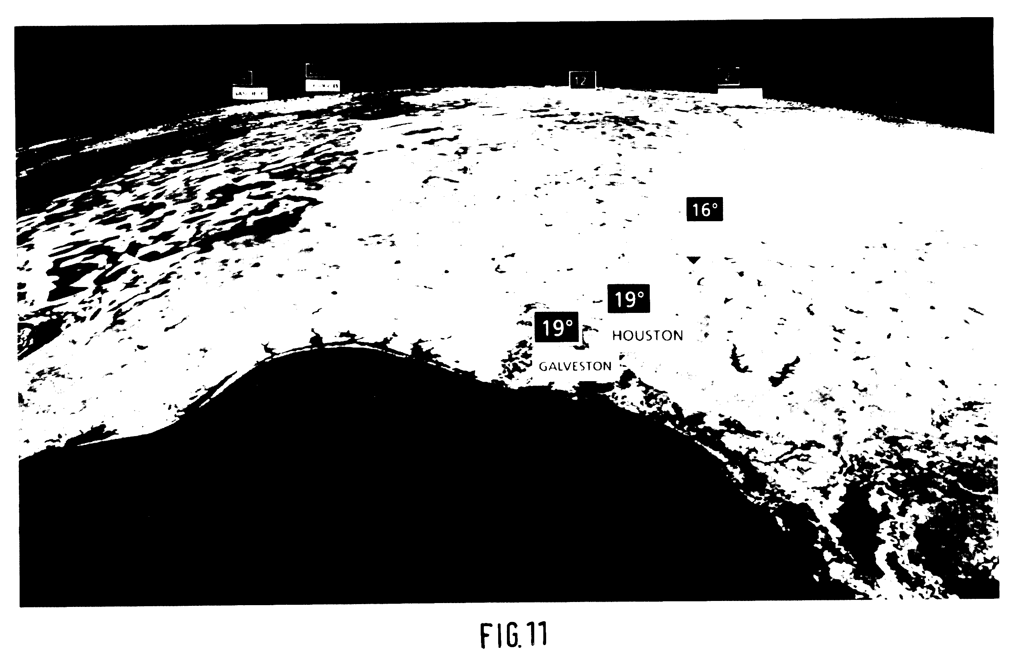

Fig. 11 zeigt eine auf dieselbe Weise erzeugte Darstellung der amerikanischen Karibikküste, wie sie für einen in erdnaher Umlaufbahn über der Karibik schwebender, nach Norden blickender Beobachter hätte. Außerdem wurden auf Anzeigetafeln die in tabellierter Form vorliegenden, aktuellen Temperaturdaten ausgewählter Orte in das Bild einmontiert. Diese Temperaturdaten wurden durch das Austauschnetz von verschiedenen meteorologischen Forschungsstationen von verschiedenen Orten angefordert und übertragen.

## Patentansprüche

1. Verfahren zur bildlichen Darstellung raumbezogener Daten eines wählbaren Objektes mit einer beliebigen, vorgegebenen Bildauflösung, wobei die Darstellung der Ansicht des Objektes durch einen Beobachter mit einem wählbaren Standort und einer wählbaren Blickrichtung entspricht
**dadurch gekennzeichnet,**
daß die raumbezogenen Daten in räumlich verteilten Datenquellen (4) gespeichert werden und daß aus dem gewählten Abstand und dem gewählten Blickwinkel des Beobachters zu dem von dem Beobachter betrachteten Objekt der darzustellende Bereich des Objektes als Blickfeld bestimmt wird,
daß die Daten des Blickfeldes in einer wählbaren Auflösung von zumindest einer der räumlich verteilten Datenquellen angefordert, übertragen und zentral gespeichert werden,
daß das Blickfeld in Abschnitte und jeder Abschnitt in geeigneter Weise in weitere Abschnitte unterteilt wird und die Daten der Abschnitte in einer ebenfalls wählbaren Auflösung von zumindest einer der räumlich verteilten Datenquellen angefordert, übertragen und zentral gespeichert werden, wobei die Auflösung so gewählt werden muß, daß die Anzahl der anzufordernden und zu übertragenden Daten größer ist, als die Anzahl der zuletzt übertragenen und zentral gespeicherten Daten, die räumlich diesem Abschnitt zugeordnet sind,
bis die zentral gespeicherten Daten des Blickfeldes oder des jeweiligen Abschnittes für die bildliche Darstellung der Daten mit der vorgegebenen Bildauflösung genügen oder keine Daten mit einer höheren Auflösung zur Verfügung stehen,
und daß zuletzt und/oder nach jeder einzelnen Übertragung und zentralen Speicherung von Daten die zentral gespeicherten Daten gemeinsam auf ihre räumliche Lage bezogen dargestellt werden.

2. Verfahren nach Anspruch 1,dadurch gekennzeichnet, daß der wählbare Standort und/oder die wählbare Blickrichtung veränderbar sind und nach jeder Änderung des Standortes oder der Blickrichtung des Beobachters die bildliche Darstellung erneut durchgeführt wird.

3. Verfahren nach mindestens einem der vorhergehenden Ansprüche, dadurch gekennzeichnet, daß die Daten der neu bestimmten Abschnitte in einer einheitlichen Auflösung angefordert, übertragen und zentral gespeichert werden.

4. Verfahren nach mindestens einem der vorhergehenden Ansprüche, dadurch gekennzeichnet, daß die Daten von einer der räumlich verteilten Datenquelle nur angefordert und übertragen werden, wenn sie nicht schon zentral gespeichert sind.

5. Verfahren nach mindestens einem der vorhergehenden Ansprüche, dadurch gekennzeichnet, daß bei der bildlichen Darstellung nur die zentral gespeicherten Daten jedes Abschnittes mit der höchsten räumlichen Dichte dargestellt werden.

6. Verfahren nach mindestens einem der vorhergehenden Ansprüche, dadurch gekennzeichnet, daß die Daten eines Abschnitts aus dem zentralen Speicher entfernt werden, wenn der Abschnitt durch eine Veränderung des Standortes oder des Blickwinkels aus dem Blickfeld gerät.

7. Verfahren nach mindestens einem der vorhergehenden Ansprüche, dadurch gekennzeichnet, daß zumindest ein vollständiger Satz raumbezogener Daten mit geringer räumlicher Auflösung ständig zentral gespeichert wird.

8. Verfahren nach mindestens einem der vorhergehenden Ansprüche, dadurch gekennzeichnet, daß die für den Beobachter hinter nichttransparenten Bereichen des Objektes befindlichen Bereiche des Objektes nicht dargestellt werden.

9. Verfahren nach mindestens einem der vorhergehenden Ansprüche, dadurch gekennzeichnet, daß zur Unterteilung des Blickfeldes in Abschnitte das Modell des Binärbaums, des Quadrantenbaumes oder des Oktantenbaumes verwendet wird.

10. Verfahren nach mindestens einem der vorhergehenden Ansprüche, dadurch gekennzeichnet, daß ein adaptives Unterteilungsmodell mit mehreren nebeneinander angewendeten Modellen zur Unterteilung des Blickfeldes in Abschnitte verwendet wird.

11. Verfahren nach mindestens einem der vorhergehenden Ansprüche, dadurch gekennzeichnet, daß zur Darstellung der Daten ein polygonales Gittermodell verwendet wird.

12. Verfahren nach mindestens einem der vorhergehenden Ansprüche, dadurch gekennzeichnet, daß der Darstellung der Daten ein dreidimensionales geometrisches Modell der Topographie des Objektes zugrunde liegt, wobei der räumliche Bezug der Daten durch die Angabe dreier Koordinaten auf dem geometrischen Modell gegeben wird.

13. Verfahren nach mindestens einem der Ansprüche 11 und 12, dadurch gekennzeichnet, daß zur Unterteilung des Blickfeldes und/oder der Abschnitte zumindest teilweise ein Oktantenbaum verwendet wird.

14. Verfahren nach mindestens einem der Ansprüche 11 bis 13, dadurch gekennzeichnet, daß der Darstellung der Daten ein zweidimensionales polygonales geometrisches Modell der Topographie des Objektes zugrunde liegt, wobei der räumliche Bezug der Daten durch die Angabe zweier Koordinaten auf dem polygonalen geometrischen Modell gegeben wird.

15. Verfahren nach Anspruch 14, dadurch gekennzeichnet, daß Höheninformationen als Farbvertices auf dem zweidimensionalen polygonalen geometrischen Modell dargestellt werden.

16. Verfahren nach mindestens einem der Ansprüche 13 bis 15, dadurch gekennzeichnet, daß ein adaptives topographisches Gittermodell verwendet wird, wobei die räumliche Entfernung zwischen zwei Gitterlinien mit größerem topographischem Anstieg kleiner werden.

17. Verfahren nach einem der Ansprüche 13 bis 16, dadurch gekennzeichnet, daß ein adaptives Unterteilungsmodell verwendet wird, wobei an den Polen die Unterteilung in einen Binärbaum übergeht.

18. Verfahren nach mindestens einem der Ansprüche 14 bis 17, dadurch gekennzeichnet, daß in dem zweidimensionalen polygonalen Gittermodell räumliche Daten auf mehreren verschiedenen zweidimensionalen Schichten dargestellt werden.

19. Verfahren nach mindestens einem der vorhergehenden Ansprüche, dadurch gekennzeichnet, daß bei einer Veränderung des Standpunktes oder der Blickrichtung des Beobachters die Daten und/oder die Koordinaten der Daten bezüglich eines neuen Koordinatensystems bestimmt werden.

20. Verfahren nach mindestens einem der vorhergehenden Ansprüche, dadurch gekennzeichnet, daß für die das Blickfeld umgebenden Bereiche eine Wahrscheinlichkeit bestimmt wird, daß bei einer Veränderung des Standortes oder des Blickwinkels des Beobachters diese Bereiche in das Blickfeld geraten und daß die Daten der Bereiche mit der höchsten Wahrscheinlichkeit angefordert, übertragen und zentral gespeichert werden.

21. Vorrichtung zur Durchführung des Verfahrens nach mindestens einem der vorhergehenden Ansprüche mit mindestens einer Anzeigeeinheit (5) zur bildlichen Darstellung raumbezogenen Daten,
**gekennzeichnet durch**
mindestens ein Eingabemedium (10) zur Eingabe des Standortes und/oder der Blickrichtung des Beobachters, eine Vielzahl räumlich verteilter Datenquellen (4), mindestens einen zentralen Datenspeicher (1,2,3), ein Datenübertragungsnetz (6,7,8) zur Datenübertragung zwischen jeder der räumlich verteilten Datenspeicher und dem zentralen Speicher und mindestens eine Vorrichtung zur Bestimmung der Darstellung (1,2,3) der zentral gespeicherten raumbezogenen Daten.

22. Vorrichtung nach Anspruch 21, dadurch gekennzeichnet, daß das Eingabemedium zur Eingabe des Standortes und/oder der Blickrichtung des virtuellen Beobachters aus einer Tastatur und/oder einem Graphiktablett und/oder einer Spacemouse mit 6 Freiheitsgraden und/oder einem dreidimensionalen Trackball und/oder einer virtuellen Kamera und/oder einem Modell des betrachteten Objektes besteht.

23. Vorrichtung nach mindestens einem der Ansprüche 21 und 22, dadurch gekennzeichnet, daß das Datenübertragungsnetz ein asynchrones Übertragungsprotokoll verwendet.
